# EUROPÄISCHE PATENTSCHRIFT

(11) **EP 4 567 591 B1**
(45) Veröffentlichungstag und Bekanntmachung des Hinweises auf die Patenterteilung: **19.08.2026**
(21) Anmeldenummer: 23214231.5
(22) Anmeldetag: 05.12.2023
(51) Int. Cl.: G06F 8/656

(54) **VERFAHREN ZUR AKTUALISIERUNG EINES SYSTEMPROGRAMMS IN EINEM AUTOMATISIERUNGSSYSTEM**
METHOD FOR UPDATING A SYSTEM PROGRAM IN AN AUTOMATION SYSTEM
PROCÉDÉ DE MISE À JOUR D'UN PROGRAMME SYSTÈME DANS UN SYSTÈME D'AUTOMATISATION

(43) Veröffentlichungstag der Anmeldung: 11.06.2025
(73) Patentinhaber: Siemens Aktiengesellschaft, 80333 München (DE)
(72) Erfinder: Grosch, Thomas, 90574 Roßtal (DE)
(74) Vertreter: Siemens Patent Attorneys

(56) Entgegenhaltungen:
- US-A1- 2022 350 589

## Beschreibung

Die vorliegende Erfindung betrifft ein Verfahren zur Aktualisierung eines Systemprogramms in einem Automatisierungssystem, ein Computerprogrammprodukt sowie ein Automatisierungssystem.

Im Automatisierungsumfeld werden häufig redundante Systeme eingesetzt. Mögliche Stillstandszeiten der Automatisierungsanlage (vorliegend auch "technische Anlage") sollen damit reduziert werden. Stillstandszeiten werden jedoch nicht nur durch Ausfälle im Automatisierungssystem selbst verursacht. Auch notwendige Wartungsarbeiten führen häufig zum Stillstand der Anlage. Eine Art von derartigen Wartungsarbeiten sind Updates der System-Software (im Folgenden auch "Firmware" bzw. "FW" bzw. "Systemprogramm" genannt), die zur Behebung von Fehlern oder zum Nachrüsten neuer Funktionen erforderlich sind. Diese erzwingen meist einen Stopp des Automatisierungssystems. Insbesondere bei redundanten Automatisierungssystemen ist dies störend und widerspricht der Erwartungshaltung des Kunden.

Im weit verbreiteten Automatisierungssystem S7 4xxH der Fa. SIEMENS ist ein Update der Systemsoftware möglich, ohne die Steuerung der Automatisierungsanlage zu unterbrechen. Allerdings verlässt das Automatisierungssystem dafür vorübergehend den redundanten Betrieb. Aus Kundensicht geht dabei vorübergehend die Ausfallsicherheit verloren, was ebenfalls der Erwartungshaltung des Kunden widerspricht.

In der US 2022/350589 A1 ist ein Aktualisierungsgerät offenbart, das einen ersten Cluster aktualisiert, der durch einen ersten Ausführungsknoten konfiguriert ist, der in der Lage ist, eine Geschäftsverarbeitung auszuführen, die von einem Lastverteiler verteilt wird, sowie einen ersten Verwaltungsknoten, der den ersten Ausführungsknoten verwaltet, und einen zweiten Cluster, der durch einen zweiten Ausführungsknoten konfiguriert ist, der in der Lage ist, eine Geschäftsverarbeitung auszuführen, die vom Lastverteiler verteilt wird, sowie einen zweiten Verwaltungsknoten, der den zweiten Ausführungsknoten verwaltet."

Vor diesem Hintergrund besteht eine Aufgabe der vorliegenden Erfindung darin, einen verbesserten Ansatz im Falle von Updates bei einem Automatisierungssystem bereitzustellen.

Gemäß einem ersten Aspekt wird bereitgestellt ein Verfahren zur Aktualisierung eines Systemprogramms in einem Automatisierungssystem, mit den Schritten:
a) Ausführen eines ersten, auf einem ersten Systemprogramm installierten Steuerprogramms auf einer ersten Verarbeitungs-Instanz in einem ersten Teilsystem des Automatisierungssystems und Ausführen eines zweiten, auf einem zweiten Systemprogramm installierten Steuerprogramms auf einer ersten Verarbeitungs-Instanz in einem zweiten Teilsystem des Automatisierungssystems, wobei die jeweilige erste Verarbeitungs-Instanz des ersten und zweiten Teilsystems über eine Synchronisierungsleitung miteinander synchronisiert werden, wobei die erste Verarbeitungs-Instanz des ersten Teilsystems eine technische Anlage steuert und die erste Verarbeitungs-Instanz des zweiten Teilsystems die Steuerung übernimmt, wenn die erste Verarbeitungs-Instanz des ersten Teilsystems ausfällt,
b) Bereitstellen jeweils einer zweiten Verarbeitungs-Instanz in dem ersten und zweiten Teilsystem, Laden einer aktualisierten Version des ersten und zweiten Systemprogramms auf die jeweilige zweite Verarbeitungs-Instanz und Starten der jeweiligen zweiten Verarbeitungs-Instanzen parallel zu Schritt a), wobei auf der aktualisierten Version des ersten Systemprogramms ein drittes Steuerprogramm und auf der aktualisierten Version des zweiten Systemprogramms ein viertes Steuerprogramm installiert wird, und
c) Konfigurieren des dritten Steuerprogramms in Abhängigkeit eines Speicherabbilds sämtlicher Zustandsinformationen des ersten Steuerprogramms und Konfigurieren des vierten Steuerprogramms in Abhängigkeit eines Speicherabbilds sämtlicher Zustandsinformationen des zweiten Steuerprogramms, indem Zustände entsprechender Threads und Werte entsprechender Eingangs- und Ausgangsvariablen in Form einer Kopie von dem ersten Steuerprogramm auf das dritte Steuerprogramm und von dem zweiten Steuerprogramm auf das vierte Steuerprogramm übertragen werden.

Vorteilhaft kann so ein Update insbesondere der Firmware erfolgen, bei dem es einerseits zu praktisch keinem Stillstand des Automatisierungssystems kommt und andererseits der redundante Betrieb desselben auch während des Updates sichergestellt ist.

Mit der Aktualisierung eines Systemprogramms ist insbesondere das Einspielen eines Firmware-Updates gemeint. "Systemprogramm" meint vorliegend insbesondere ein Betriebssystem, beispielsweise ein Betriebssystem einer speicherprogrammierbaren Steuerung. Das "Steuerprogramm" ist demgegenüber eine Anwender-spezifische Software (Applikation), die auf dem Systemprogramm installiert wird.

Das erste und zweite Systemprogramm weisen vorzugsweise einen identischen Quellcode auf. Genauso weisen vorzugsweise auch die aktualisierten Versionen des ersten und zweiten Systemprogramms einen identischen Quellcode auf. In der aktualisierten Version können beispielsweise gegenüber der alten Version Fehler behoben sein oder es können Funktionen hinzugekommen sein. Das erste und zweite Systemprogramm bzw. die jeweils aktualisierte Version können auch als unterschiedliche Instanzen derselben Software ausgebildet sein. Das erste, zweite, dritte und vierte Steuerprogramm weisen vorzugsweise einen identischen Quellcode auf.

Das in Schritt a) ausgeführte erste und zweite Steuerprogramm weisen jeweils Threads (auch "Aktivitätsträger" genannt) sowie Eingangs- und Ausgangsvariablen auf, die im (ggf. virtualisierten) Arbeitsspeicher der jeweiligen ersten Verarbeitungs-Instanz abgelegt sind. Z.B. kann eine Ausgangsvariable des ersten Steuerprogramms repräsentativ für eine Ausgangsspannung sein, die an die technische Anlage ausgegeben wird. Nach der Installation des dritten und vierten Steuerprogramms in Schritt b) werden diese auf der jeweiligen zweiten Verarbeitungs-Instanz gestartet, aber noch nicht ausgeführt. Der Start bewirkt, dass die entsprechenden Datenstrukturen im (ggf. virtualisierten) Arbeitsspeicher der jeweiligen zweiten Verarbeitungs-Instanz erzeugt werden. Die entsprechenden Threads bleiben jedoch am Startpunkt stehen, weil das dritte und vierte Steuerprogramm noch nicht ausgeführt werden. Im Konfiguriervorgang gemäß Schritt c) werden nun die Zustandsinformationen übertragen. D.h., die Zustände entsprechender Threads sowie die Werte entsprechender Eingangs- und Ausgangsvariablen werden in Form einer Kopie von dem erste Steuerprogramm auf das dritte Steuerprogramm und von dem zweiten Steuerprogramm auf das vierte Steuerprogramm übertragen. Nach dem Übertragungsvorgang befindet sich damit das dritte Steuerprogramm insgesamt in demselben Zustand wie das erste Steuerprogramm vor der Übertragung. Genauso befindet sich das vierte Steuerprogramm insgesamt in demselben Zustand wie das zweite Steuerprogramm vor der Übertragung. Damit sind von diesem Zeitpunkt an, das zweite und vierte Programm jeweils in der Lage, wenn diese von der jeweiligen zweiten Verarbeitungs-Instanz ausgeführt werden, die technische Anlage zu steuern.

Bei dem ersten und zweiten Teilsystem handelt es sich vorzugsweise um physikalisch (und nicht etwa nur virtuell) unterschiedliche Systeme. Insbesondere weisen das erste und zweite Teilsystem eine unterschiedliche Hardware auf. Das erste und zweite Teilsystem sind vorzugsweise voneinander beabstandet, und zwar derart, dass ein erwartbarer physischer Schadensfall durch externe Einwirkung (wie etwa ein Brand) sich nicht auf beide Teilsystem auswirken kann und/oder nicht zwischen den Teilsystemen übergreifen kann. Insbesondere können sich die Teilsysteme in unterschiedlichen Brandabschnitten befinden. Dadurch wird eine hohe Ausfallsicherheit gewährleistet.

In Ausführungsformen können das erste und zweite Teilsystem in unmittelbarer Nachbarschaft der angesteuerten technischen Anlage oder in einer oder in unterschiedlichen Clouds verwirklicht sein. Letzterenfalls sind das erste und zweite Teilsystem mit einer hochverfügbaren Datenleitung mit der technischen Anlage verbunden.

Unter einer "Verarbeitungs-Instanz" ist vorliegend vorzugweise eine Einheit aus (physikalischer oder virtualisierter) Hardware (bspw. CPU, Arbeitsspeicher und/oder Schnittstellen) zu verstehen. Hierauf wird zunächst das entsprechende Systemprogramm (als Betriebssystem) installiert. Auf das entsprechende Systemprogramm wiederum wird das entsprechende Steuerprogramm installiert. Die Verarbeitungs-Instanz führt das Systemprogramm und das Steuerprogramm aus und erzeugt in Abhängigkeit von Eingaben (insbesondere aus der technischen Anlage, bspw. in Form von Sensormesswerten) entsprechende Ausgaben (insbesondere an die technische Anlage, bspw. Steuersignale an Aktoren).

Das erste und zweite Teilsystem können über einen (physikalischen oder virtualisierten) Bus, wie etwa Ethernet oder Fieldbus, mit der technischen Anlage verbunden sein. Insbesondere besteht eine Verbindung zu Sensoren der technischen Anlage, welche die o.g. Eingaben bereitstellen. Ferner besteht eine Verbindung zu Aktoren der technischen Anlage, welche an welchen die o.g. Ausgaben bereitgestellt werden.

Die technische Anlage ist beispielsweise ein Tunnelanlage, eine Gleisanlage, eine Produktionsanlage, eine verfahrenstechnische Anlage, eine Fördertechnik, ein Schiff etc.

Die Synchronisierungsleitung ist beispielsweise ein Bus, welcher insbesondere einen Lichtwellenleiter aufweist.

Gemäß einer Ausführungsform werden vor dem Konfigurieren in Schritt c) die jeweiligen ersten Verarbeitungs-Instanzen in dem ersten und zweiten Teilsystem angehalten, soweit die Ausführung des ersten und zweiten Steuerprogramms betroffen ist.

Mit anderen Worten stehen die ersten Verarbeitungs-Instanzen still, d.h. diese erzeugen insbesondere keine Änderungen ihrer Ausgaben (d.h. kurzzeitig keine veränderte Ansteuerung der technischen Anlage), während des Konfigurierens gemäß Schritt c). Der Stillstand dürfte aufgrund der hohen Datenübertragungsgeschwindigkeit innerhalb des jeweiligen Teilsystems nur wenige Millisekunden dauern. Vorteilhaft existiert in der Folge keine Aufholphase. Eine solche ist etwa bei einem nachlaufenden Betrieb erforderlich, wie in EP 2 667 269 A1 beschrieben.

Die Steuerung der technischen Anlage wird unmittelbar nach Abschluss des Konfiguriervorgangs gemäß Schritt c) von der zweiten Verarbeitungs-Instanz des ersten oder zweiten Teilsystems übernommen, wobei die zweite Verarbeitungsinstanz des jeweils anderen Teilsystems die Redundanz darstellt, d.h., sie übernimmt, wenn es zu einer Störung oder einem Ausfall kommt. Entsprechend laufen die ersten Verarbeitungsinstanzen nach Schritt c) auch nicht mehr los, sondern verbleiben in einem sog. Idle-Modus oder werden ganz abgeschaltet.

Gemäß einer weiteren Ausführungsform ist die Ausführung des zweiten (bzw. vierten) Steuerprogramms auf der ersten (bzw. zweiten) Verarbeitungs-Instanz in dem zweiten Teilsystem in Bezug auf die Ausführung des ersten (bzw. dritten) Steuerprogramms auf der ersten (bzw. zweiten) Verarbeitungs-Instanz in dem ersten Teilsystem nachlaufend ausgebildet

Ein nachlaufender Betrieb ist grundsätzlich beispielsweise in EP 2 657 797 A1. Dieser stellt sicher, dass beide Teilsysteme stets den gleichen internen Zustand haben - wenn auch zu unterschiedlichen Zeitpunkten. Dies erlaubt die Verwendung von - im Vergleich zur Datenverarbeitung in den Verarbeitungs-Instanzen - langsamen Kommunikationsverbindungen.

Das Synchronisieren der ersten Verarbeitungs-Instanzen des ersten und zweiten Teilsystems gemäß Schritt a) kann aufweisen:
Übertragen von Prozesseingangswerten der ersten Verarbeitungs-Instanz des ersten Teilsystems, und
Übertragen von Freigaben der ersten Verarbeitungs-Instanz des ersten Teilsystems, die anzeigen, welche Verarbeitungsschritte des ersten Steuerprogramms bereits verarbeitet wurden,
Synchronisieren des zweiten Steuerprogramms in Abhängigkeit der übertragenen Prozesseingangsparameter und Freigaben.

Die Verwendung von Prozesseingangswerten und Freigaben ist etwa in EP 2 657 797 A1 beschrieben und stellt einen einfachen Weg dar, um das zweite Teilsystem dem ersten Teilsystem nachzuführen. Durch die Freigaben wird sichergestellt, dass das nachlaufende zweite Teilsystem das gleiche "Threadgebirge" durchläuft wie das vorauslaufende erste Teilsystem. Dies bedeutet auch, dass "Threadwechsel" an den gleichen Stellen der Steuerprogramme auftreten. Die Synchronisierung kann vorliegend aber auch auf andere Weise bewerkstelligt sein. Wichtig ist jedoch, dass vorzugsweise ein sog. stoßfreies Failover gewährleistet wird. Dadurch werden Stillstandszeiten der gesteuerten technischen Anlage vermieden.

An Schritt c) kann sich folgender Schritt d) anschließen:
Ausführen des konfigurierten dritten und vierten Steuerprogramms auf der aktualisierten Version des ersten und zweiten Systemprogramms auf der jeweiligen zweiten Verarbeitungs-Instanz in dem ersten und zweiten Teilsystem, wobei die zweiten Verarbeitungs-Instanzen des ersten und zweiten Teilsystems über eine Synchronisierungsleitung miteinander synchronisiert werden, wobei die zweite Verarbeitungs-Instanz des ersten (oder: ersten oder zweiten) Teilsystems die technische Anlage steuert und die zweite Verarbeitungs-Instanz des zweiten (oder: jeweils anderen) Teilsystems die Steuerung übernimmt, wenn die zweite Verarbeitungs-Instanz des ersten (oder: ersten oder zweiten) Teilsystems ausfällt.

Das Synchronisieren der zweiten Verarbeitungs-Instanzen des ersten und zweiten Teilsystems gemäß Schritt d) kann aufweisen:
Übertragen von Prozesseingangswerten der zweiten Verarbeitungs-Instanz des ersten Teilsystems, und
Übertragen von Freigaben der zweiten Verarbeitungs-Instanz des ersten Teilsystems, die anzeigen, welche Verarbeitungsschritte des dritten Steuerprogramms bereits verarbeitet wurden,
Synchronisieren des vierten Steuerprogramms in Abhängigkeit der übertragenen Prozesseingangsparameter und Freigaben.

Gemäß einer weiteren Ausführungsform erfolgt das Starten der jeweiligen zweiten Verarbeitungs-Instanzen gemäß Schritt b) in Abhängigkeit von Konfigurationsdaten, welche Informationen bezüglich der Konfiguration der technischen Anlage enthalten.

Gemäß einer weiteren Ausführungsform ist das in Schritt b) zu installierende Steuerprogramm jeweils in dem ersten und zweiten Teilsystem (oder in einem zugeordneten Cloudspeicher) gespeichert.

Dadurch können insbesondere die Schnittstellen der zweiten Verarbeitungs-Instanzen zur technischen Anlage konfiguriert werden, bevor der Konfigurierprozess gemäß Schritt c) beginnt. Die Konfigurationsdaten können insbesondere Informationen über die angeschlossenen Sensoren und Aktoren der technischen Anlage enthalten. Soweit vorliegend von einer technischen Anlage gesprochen wird, meint dies insbesondere die Peripherie aus Sicht des Automatisierungssystems, also diejenigen Komponenten der technischen Anlage (wie etwas Sensoren und Aktoren), mit denen das Automatisierungssystem bzw. die ersten und zweiten Teilsysteme (dort wiederum die erste oder zweite Verarbeitungs-Instanz) kommuniziert.

Gemäß einer weiteren Ausführungsform wird nach dem Starten der jeweiligen zweiten Verarbeitungs-Instanzen gemäß Schritt b) eine passive Verbindung der ersten Verarbeitungs-Instanz des zweiten Teilsystems unterbrochen, und anschließend baut die gestartete zweite Verarbeitungs-Instanz des ersten Teilsystems eine passive Verbindung zur technischen Anlage auf.

Eine "passive" Verbindung ist vorliegend eine solche, bei der die Peripherie bzw. technische Anlage die Ausgaben ignoriert und die Eingaben als ungültig kennzeichnet. Eine "aktive" Verbindung ist hingegen eine solche, bei der die Peripherie die Ausgaben an die Aktoren weitergibt und die Eingangswerte als gültig kennzeichnet.

Gemäß einer weiteren Ausführungsform baut (insbesondere unmittelbar) nach dem Konfigurieren gemäß Schritt c) die zweite Verarbeitungs-Instanz des ersten Teilsystems eine aktive Verbindung zur technischen Anlage und die zweite Verarbeitungsinstanz des zweiten Teilsystems eine passive Verbindung zur technischen Anlage auf.

Dadurch steht wieder ein redundantes Automatisierungssystem zur Verfügung.

Gemäß einer weiteren Ausführungsform weisen das erste und zweite Teilsystem jeweils einen Hypervisor auf, der die erste und zweite Verarbeitungs-Instanz bereitstellt.

Dadurch kann können die mehreren Verarbeitungs-Instanzen auf einfache Weise bereitgestellt werden und gemeinsam Systemressourcen nutzen.

Gemäß einer weiteren Ausführungsform weisen das erste und zweite Teilsystem jeweils eine speicherprogrammierbare Steuerung, eine Stromversorgung und/oder eine Schnittstelle zur technischen Anlage auf.

Damit ergeben sich vorteilhaft voneinander unabhängige Teilsysteme.

Gemäß einem zweiten Aspekt wird bereitgestellt ein Computerprogrammprodukt, umfassend Befehle, die bei der Ausführung des Programms durch einen Computer diesen veranlassen, das vorstehende Verfahren auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Der "Computer" kann vorliegend auch mehrere (ggf. voneinander physisch getrennte) Rechnereinrichtungen (wie bspw. speicherprogrammierbare Steuerungen) umfassen.

Gemäß einem dritten Aspekt wird bereitgestellt ein Automatisierungssystem, aufweisend:
ein erstes Teilsystem mit einer ersten Verarbeitungs-Instanz, welche dazu eingerichtet ist, ein erstes, auf einem ersten Systemprogramm installiertes Steuerprogramm auszuführen, um dadurch eine technische Anlage zu steuern,
ein zweites Teilsystem mit einer ersten Verarbeitungs-Instanz, welche dazu eingerichtet ist, ein zweites, auf einem zweiten Systemprogramm installiertes Steuerprogramm auszuführen, um dadurch die technische Anlage zu steuern, wenn die erste Verarbeitungs-Instanz des ersten Teilsystems ausfällt,
eine Synchronisierungsleitung, welche dazu eingerichtet ist, die jeweilige erste Verarbeitungs-Instanz des ersten und zweiten Teilsystems miteinander zu synchronisieren,
wobei das erste und zweite Teilsystem jeweils zum Bereitstellen einer zweiten Verarbeitungs-Instanz eingerichtet sind und über eine Schnittstelle verfügen, über die eine aktualisierte Version des ersten und zweiten Systemprogramms auf die jeweilige zweite Verarbeitungs-Instanz ladbar und ein drittes Steuerprogramm auf der aktualisierten Version des ersten Systemprogramms und ein viertes Steuerprogramm auf der aktualisierten Version des zweiten Systemprogramms installierbar ist, und
wobei das erste und zweite Teilsystem zum Konfigurieren des dritten Steuerprogramms in Abhängigkeit eines Speicherabbilds sämtlicher Zustandsinformationen des ersten Steuerprogramms und Konfigurieren des vierten Steuerprogramms in Abhängigkeit eines Speicherabbilds sämtlicher Zustandsinformationen des zweiten Steuerprogramms eingerichtet sind, indem sie dazu eingerichtet sind, Zustände entsprechender Threads und Werte entsprechender Eingangs- und Ausgangsvariablen in Form einer Kopie von dem ersten Steuerprogramm auf das dritte Steuerprogramm und von dem zweiten Steuerprogramm auf das vierte Steuerprogramm zu übertragen.

Die Schnittstelle, über die eine aktualisierte Version des ersten und zweiten Systemprogramms auf die jeweilige zweite Verarbeitungs-Instanz ladbar ist, kann als jede bekannte Datenschnittstelle ausgebildet sein, beispielsweise ein Port.

Die für das vorgeschlagene Verfahren beschriebenen Ausführungsformen und Merkmale gelten für das vorgeschlagene Automatisierungssystem und Computerprogrammprodukt entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein beispielhaftes Automatisierungssystem in Vorbereitung für das FW-Update im redundanten Betrieb;
- Fig. 2: zeigt das Laden der neuen FW-Versionen im Anschluss an den in Fig. 1 gezeigten Zustand; und
- Fig. 3: zeigt das Umschalten der passiven Peripherieverbindung im Anschluss an den in Fig. 2 gezeigten Zustand;
- Fig. 4: zeigt das Konfigurieren im Anschluss an den in Fig. 3 gezeigten Zustand;
- Fig. 5: zeigt die Übernahme der Peripherie im Anschluss an den in Fig. 4 gezeigten Zustand;
- Fig. 6: zeigt die Situation nach FW-Update; und
- Fig. 7: zeigt als Flussdiagramm ein Verfahren entsprechend den Fig. 1 - 6.

In den Figuren sind gleiche oder funktionsgleiche Elemente mit denselben Bezugszeichen versehen worden, sofern nichts anderes angegeben ist.

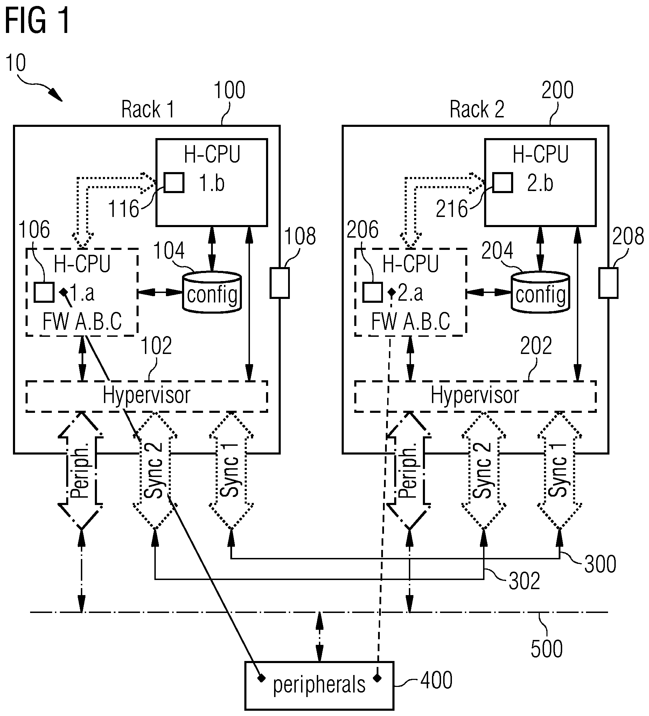

Fig. 1 zeigt - in einem Ausgangszustand für das vorliegende Verfahren - ein redundantes Automatisierungssystem 10 bestehend aus einem ersten Teilsystem 100 und einem zweiten Teilsystem 200. Die Teilsysteme 100, 200 können in Form separater Racks (hier mit "Rack 1" und "Rack 2" bezeichnet), jeweils umfassend eine nicht weiter gezeigte speicherprogrammierbare Steuerung, einen Stromanschluss und Schnittstellen zur Peripherie 400.

Ein Merkmal der beiden Teilsysteme 100, 200 ist vorzugsweise ein Hypervisor 102, 202, der die Hardware (Prozessor, Speicher, Schnittstellen, etc.) virtualisiert. Mehrere Instanzen des Systemprogramms (FW) können dabei auf der gleichen Hardware parallel zur Ausführung gebracht werden. Im hier vorliegenden Beispiel handelt es sich um die erste und zweite Verarbeitungs-Instanz H-CPU 1a, H-CPU 1b auf dem Hypervisor 102 (Teilsystem 100) sowie die erste und zweite Verarbeitungs-Instanz H-CPU 2a, H-CPU 2b auf dem Hypervisor 202 (Teilsystem 200) .

Die beiden Teilsysteme 100, 200 sind über Synchronisationsleitungen 300, 302 miteinander verbunden, die als Lichtwellenleiter ausgebildet sein können. Die Peripherie 400 (vorliegend auch als "technische Anlage" bezeichnet) ist über einen Bus 500 an beide Teilsysteme 100, 200 angebunden. Die durchgezogen gezeichnete Linie stellt dabei die aktive, die gestrichelt gezeichnete Linie die passive Verbindung dar (bei PROFINET Feldbus Primary bzw. Backup Application Relation - "AR").

Auf den ersten Verarbeitungs-Instanzen H-CPU 1a, H-CPU 2a des ersten und zweiten Teilsystems 100, 200 ist jeweils - auf dem dortigen Systemprogramm FW - ein erstes Steuerprogramm 106 bzw. zweites Steuerprogramm 206 installiert, wobei die Programme 106, 206 ggf. einen identischen Quellcode aufweisen. Das Systemprogramm FW stellt das Betriebssystem dar, wohingegen das Steuerprogramm 106, 206 eine Applikation ist, die Anwender-seitig konfiguriert wird und dazu geeignet ist, die technische Anlage 400 in gewünschter Weise anzusteuern.

In beiden Teilsystemen 100, 200 ist die aktuelle Konfiguration des Automatisierungssystems 10, insbesondere der technischen Anlage 400, in Form einer Konfigurationsdatei 104, 204 auf einem Speicher hinterlegt. Der Speicher kann ferner eine Kopie des Steuerprogramms 106, 206, insbesondere als ausführbare Datei, enthalten.

Vor dem Update-Vorgang laufen beide Teilsysteme 100, 200 im redundanten Betrieb mit der FW Version A.B.C. Die Peripherie bzw. die technische Anlage 400 wird von dem Steuerprogramm 106 bzw. der Verarbeitungs-Instanz H-CPU 1a angesteuert bzw. empfängt Daten (bspw. Messdaten) von dieser. Die Synchronisation der beiden Teilsysteme 100, 200 bzw. der Verarbeitungs-Instanzen H-CPU 1a, H-CPU 2a erfolgt beispielsweise gemäß dem in EP 2 657 797 A1 beschriebenen Verfahren, wobei die Verarbeitungs-Instanzen H-CPU 1a die vorauslaufende und die Verarbeitungs-Instanzen H-CPU 2a die nachlaufende Instanz ist. Fällt das Teilsystem 100 aus, übernimmt das Teilsystem 200 im Sinne eines stoßfreien Failovers. D.h., das Steuerprogramm 206 der Verarbeitungs-Instanz H-CPU 2a übernimmt von da an die Steuerung der technischen Anlage 400.

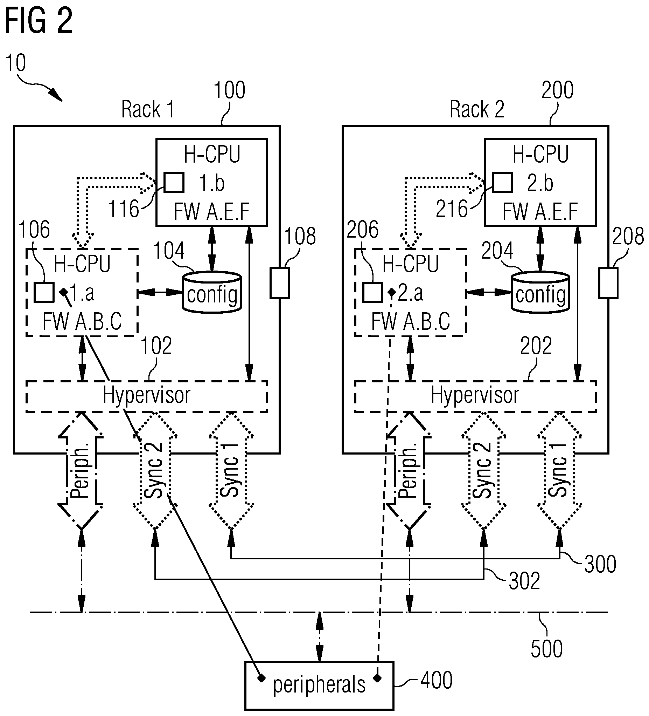

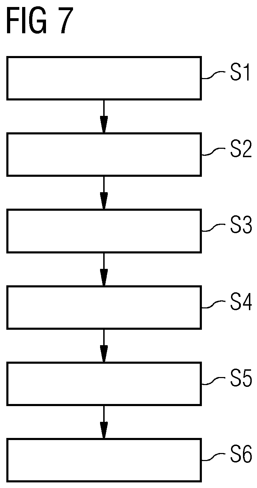

Im ersten Schritt S1 (siehe Fig. 2 und 7) wird die neue FW-Version A.E.F auf die zweite Verarbeitungs-Instanz H-CPU 1b im ersten Teilsystem 100 und auf die zweite Verarbeitungs-Instanz H-CPU 2b im zweiten Teilsystem 200 geladen, wobei die neue FW-Version A.E.F über eine jeweilige Schnittstelle 108 bzw. 208 (bspw. eine Ethernetschnittstelle, USB-Schnittstelle oder dgl.) der Teilsysteme 100, 200 bereitgestellt wird. Die Verarbeitungs-Instanzen H-CPU 1b und 2b können in Ausführungsformen erst dann bereitgestellt werden, wenn ein FW-Update ansteht oder gleich mit der Erstinbetriebnahme des Automatisierungssystems 10 vorgesehen sein.

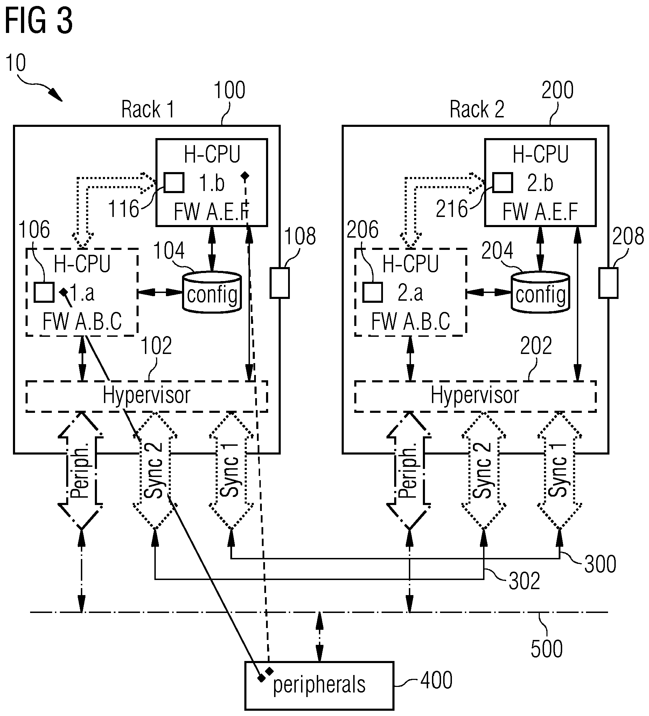

Im zweiten Schritt S2 (siehe Fig. 3 und 7) starten die beiden Verarbeitungs-Instanzen H-CPU 1b und H-CPU 2b mit der neuen FW-Version A.E.F. Der Hochlauf der beiden Verarbeitungs-Instanzen H-CPU 1b und H-CPU 2b erfolgt auf Basis der aktuell vorhandenen Konfigurationsdatei 104 bzw. 204. Ein drittes und viertes Steuerprogramm 116, 216 werden basierend auf der Konfigurationsdatei 104 bzw. 204 auf der neuen FW-Version A.E.F der Verarbeitungs-Instanzen H-CPU 1b bzw. H-CPU 2b installiert und gestartet.

Nachdem die Verarbeitungs-Instanzen H-CPU 1b und H-CPU 2b hochgefahren sind, deaktiviert die Verarbeitungs-Instanz H-CPU 2a in einem Schritt S3 (siehe Fig. 3 und 7) ihre passive Verbindung zur Peripherie 400 (Backup AR). Eine neue passive Verbindung (gestrichelte Linie in Fig. 3) wird von der Verarbeitungs-Instanz H-CPU 1b aufgebaut. Die beiden Verarbeitungs-Instanzen H-CPU 1b und 2b bearbeiten zu diesem Zeitpunkt keines der Steuerprogramme 116, 216.

In einem Schritt S4 werden parallel auf beiden Teilsystemen 100, 200 die Steuerprogramme 116, 216 auf den Verarbeitungs-Instanzen H-CPU 1b und H-CPU 2b konfiguriert. Dies erfolgt in Abhängigkeit eines Speicherbilds der Steuerprogramme 106, 206 auf den Verarbeitungs-Instanzen H-CPU 1a und 2a. D.h., es wird lokal ein Konfiguriervorgang durchgeführt. Die Verarbeitungs-Instanzen H-CPU 1a und 1b bzw. 2a und 2b führen diesen Konfiguriervorgang jeweils mit dem gleichen Systemzustand durch.

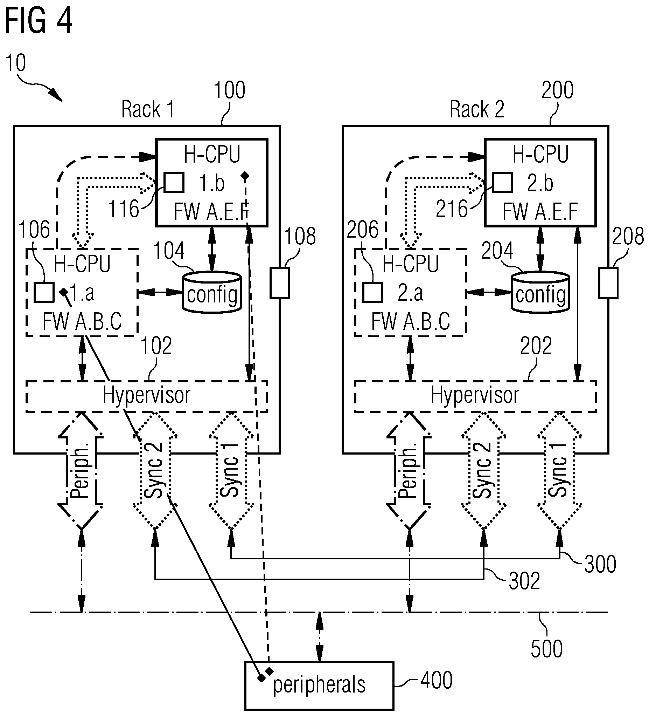

Für den Konfiguriervorgang wird das Speicherabbild der Verarbeitungs-Instanzen H-CPU 1a und H-CPU 2a - soweit für den aktuellen Zustand der Steuerprogramme 106, 206 relevant - in die Verarbeitungs-Instanz H-CPU 1b bzw. 2b übertragen (gestrichelter Pfeil in Fig. 4), während die Verarbeitung auf den Verarbeitungs-Instanzen 1a und 2a - wiederum soweit für den aktuellen Zustand der Steuerprogramme 106, 206 relevant - stillsteht, d.h. der Prozess nicht gesteuert wird. Im Gegensatz dazu läuft bei dem Konfigurierverfahren aus EP 2 667 269 A1 die vorauslaufende Verarbeitungs-Instanz direkt nach dem Erstellen des Speicherabbilds weiter. Da jedoch die beiden Konfiguriervorgänge vorliegend jeweils lokal in einem Teilsystem 100 bzw. 200 stattfinden, braucht das Übertragen des Speicherabbilds selbst kaum Zeit. Es handelt sich dabei im Wesentlichen um das Kopieren von Speicherinhalten. Der Stillstand während der Übertragung des Speicherabbilds auf die Verarbeitungs-Instanz H-CPU 1b und 2b ist deshalb akzeptabel (im Bereich von Millisekunden).

Der Vorteil dieser Vorgehensweise besteht darin, dass bei den beiden lokalen Konfiguriervorgängen keine Aufholphase existiert, wie sie bei dem in EP 2 667 269 A1 beschriebenen Ansatz notwendig ist. Diese Aufholphase ist bei unterschiedlichen Versionen der Systemprogramm schwierig zu bewerkstelligen. Bei dem vorliegenden Verfahren ist entweder die alte FW aktiv oder die neue FW. Die neuere FW muss damit den synchronisierten Betrieb mit der alten FW nicht unterstützen und wird damit einfacher.

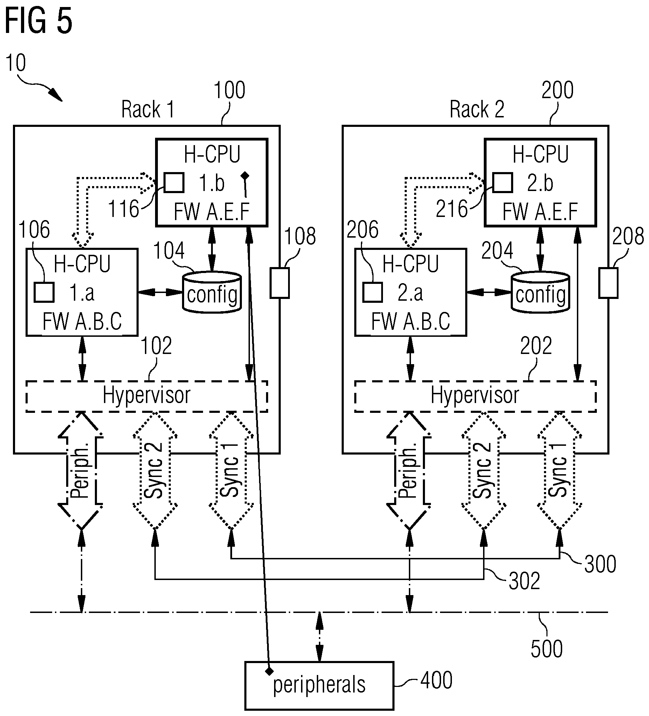

Unmittelbar nach dem Konfiguriervorgang wird die aktive Peripherieverbindung auf die Verarbeitungs-Instanz H-CPU 1b umgeschaltet (Schritt S5 in Fig. 7 entsprechend der Darstellung der Fig. 5). Dadurch besitzt die Verarbeitungs-Instanz H-CPU 1b nun Zugang zur Peripherie 400. Die Verarbeitungs-Instanzen H-CPU 1b und 2b arbeiten von jetzt an im redundanten Betrieb, beispielsweis wie in EP 2 657 797 A1 beschrieben. Die Verarbeitungs-Instanzen H-CPU Instanzen 1a und 2a werden beendet und sind ab jetzt inaktiv.

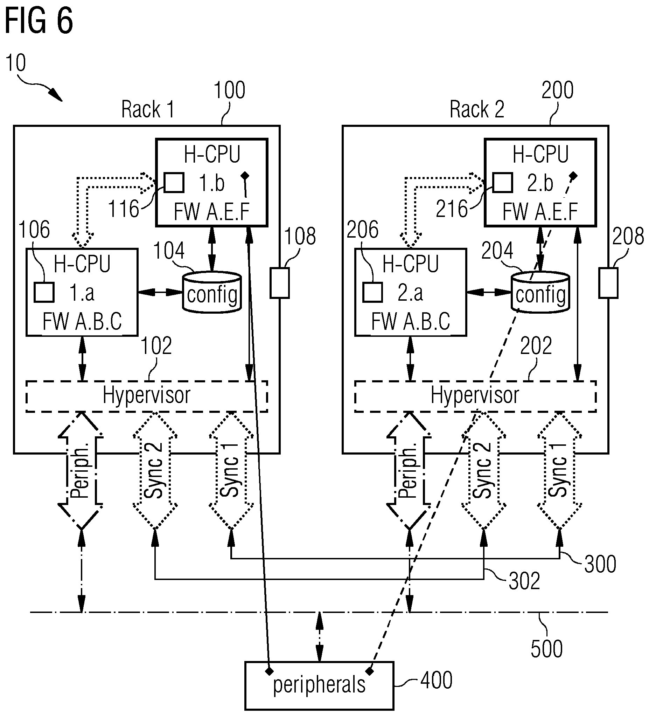

In einem Schritt S6 (Fig. 6 und 7) wird vorzugsweise die passive Peripherieverbindung (gestrichelte Linie in Fig. 6) von der Verarbeitungs-Instanz H-CPU 2b wieder aufgebaut. Damit ist die Peripherie 400 wieder redundant an die beiden Teilsysteme 100, 200 angebunden. Das Automatisierungssystem 10 läuft nun im redundanten Betrieb mit der FW-Version A.E.F. Ein weiteres FW-Update kann in ähnlicher Weise nun mit den Verarbeitungs-Instanzen H-CPU 1a und 2a durchgeführt werden.

## Patentansprüche

1. Verfahren zur Aktualisierung eines Systemprogramms (FW A.B.C.) in einem Automatisierungssystem (10), mit den Schritten:
a) Ausführen eines ersten, auf einem ersten Systemprogramm (FW A.B.C.) installierten Steuerprogramms (106) auf einer ersten Verarbeitungs-Instanz (H-CPU 1a) in einem ersten Teilsystem (100) des Automatisierungssystems (10) und Ausführen eines zweiten, auf einem zweiten Systemprogramm (FW A.B.C.) installierten Steuerprogramms (206) auf einer ersten Verarbeitungs-Instanz (H-CPU 2a) in einem zweiten Teilsystem (200) des Automatisierungssystems (10), wobei die jeweilige erste Verarbeitungs-Instanz (H-CPU 1a, H-CPU 1b) des ersten und zweiten Teilsystems (100, 200) über eine Synchronisierungsleitung (300, 302) miteinander synchronisiert werden, wobei die erste Verarbeitungs-Instanz (H-CPU 1a) des ersten Teilsystems (100) eine technische Anlage (400) steuert und die erste Verarbeitungs-Instanz (H-CPU 1b) des zweiten Teilsystems (200) die Steuerung übernimmt, wenn die erste Verarbeitungs-Instanz (H-CPU 1a) des ersten Teilsystems (100) ausfällt,
**gekennzeichnet durch** die folgenden Schritte:
b) Bereitstellen jeweils einer zweiten Verarbeitungs-Instanz (H-CPU 1b, H-CPU 2b) in dem ersten und zweiten Teilsystem (100, 200), Laden (S1) einer aktualisierten Version (FW A.E.F.) des ersten und zweiten Systemprogramms auf die jeweilige zweite Verarbeitungs-Instanz (H-CPU 1b, H-CPU 2b) und Starten (S2) der jeweiligen zweiten Verarbeitungs-Instanzen (H-CPU 1b, H-CPU 2b) parallel zu Schritt a), wobei auf der aktualisierten Version (FW A.E.F.) des ersten Systemprogramms ein drittes Steuerprogramm (116) und auf der aktualisierten Version (FW A.E.F.) des zweiten Systemprogramms ein viertes Steuerprogramm (216) installiert wird, und
c) Konfigurieren (S4) des dritten Steuerprogramms (116) in Abhängigkeit eines Speicherabbilds sämtlicher Zustandsinformationen des ersten Steuerprogramms (106) und Konfigurieren des vierten Steuerprogramms (216) in Abhängigkeit eines Speicherabbilds sämtlicher Zustandsinformationen des zweiten Steuerprogramms (206), indem Zustände entsprechender Threads und Werte entsprechender Eingangs- und Ausgangsvariablen in Form einer Kopie von dem ersten Steuerprogramm (106) auf das dritte Steuerprogramm (116) und von dem zweiten Steuerprogramm (206) auf das vierte Steuerprogramm (216) übertragen werden.

2. Verfahren nach Anspruch 1,
**dadurch gekennzeichnet,**
**dass** vor dem Konfigurieren in Schritt c) die jeweiligen ersten Verarbeitungs-Instanzen (H-CPU 1a, H-CPU 2a) in dem ersten und zweiten Teilsystem (100, 200) angehalten werden, soweit die Ausführung des ersten und zweiten Steuerprogramms (106, 206) betroffen ist.

3. Verfahren nach Anspruch 1 oder 2,
**dadurch gekennzeichnet,**
**dass** die Ausführung des zweiten Steuerprogramms (206) auf der ersten Verarbeitungs-Instanz (H-CPU 2a) in dem zweiten Teilsystem (200) in Bezug auf die Ausführung des ersten Steuerprogramms (106) auf der ersten Verarbeitungs-Instanz (H-CPU 1a) in dem ersten Teilsystem (100) nachlaufend ausgebildet ist.

4. Verfahren nach einem der Ansprüche 1 - 3,
**dadurch gekennzeichnet,**
**dass** das Synchronisieren der ersten Verarbeitungs-Instanzen (H-CPU 1a, H-CPU 1b) des ersten und zweiten Teilsystems (100, 200) gemäß Schritt a) aufweist:
Übertragen von Prozesseingangswerten der ersten Verarbeitungs-Instanz (H-CPU 1a) des ersten Teilsystems (100), und
Übertragen von Freigaben der ersten Verarbeitungs-Instanz (H-CPU 1a) des ersten Teilsystems (100), die anzeigen, welche Verarbeitungsschritte des ersten Steuerprogramms (106) bereits verarbeitet wurden,
Synchronisieren des zweiten Steuerprogramms (106) in Abhängigkeit der übertragenen Prozesseingangsparameter und Freigaben.

5. Verfahren nach einem der Ansprüche 1 - 4,
**dadurch gekennzeichnet,**
**dass** das Starten der jeweiligen zweiten Verarbeitungs-Instanzen (H-CPU 1b, H-CPU 2b) gemäß Schritt b) in Abhängigkeit von Konfigurationsdaten (104, 204) erfolgt, welche Informationen bezüglich der Konfiguration der technischen Anlage (400) enthalten, und/oder wobei die Konfigurationsdaten und/oder das in Schritt b) zu installierende Steuerprogramm (116, 216) jeweils in dem ersten und zweiten Teilsystem (100, 200) gespeichert ist.

6. Verfahren nach einem der Ansprüche 1 - 5,
**dadurch gekennzeichnet,**
**dass** nach dem Starten der jeweiligen zweiten Verarbeitungs-Instanzen (H-CPU 1b, H-CPU 2b) gemäß Schritt b) eine passive Verbindung der ersten Verarbeitungs-Instanz (H-CPU 2a) des zweiten Teilsystems (200) unterbrochen wird und anschließend die gestartete zweite Verarbeitungs-Instanz (H-CPU 1b) des ersten Teilsystems (100) eine passive Verbindung zur technischen Anlage (400) aufbaut (S3).

7. Verfahren nach einem der Ansprüche 1 - 6,
**dadurch gekennzeichnet,**
**dass** nach dem Konfigurieren gemäß Schritt c) die zweite Verarbeitungs-Instanz (H-CPU 1b) des ersten Teilsystems (100) eine aktive Verbindung zur technischen Anlage (400) und die zweite Verarbeitungsinstanz (H-CPU 1b) des zweiten Teilsystems (200) eine passive Verbindung zur technischen Anlage aufbaut (S5, S6).

8. Verfahren nach einem der Ansprüche 1 - 7,
**dadurch gekennzeichnet,**
**dass** das erste und zweite Teilsystem (100, 200) jeweils einen Hypervisor (102, 202) aufweisen, der die erste und zweite Verarbeitungs-Instanz (H-CPU 1a, H-CPU 1b, H-CPU 2a, H-CPU 2b) bereitstellt.

9. Verfahren nach einem der Ansprüche 1 - 8,
**dadurch gekennzeichnet,**
**dass** das erste und zweite Teilsystem (100, 200) jeweils eine speicherprogrammierbare Steuerung, eine Stromversorgung und/oder eine Schnittstelle (500) zur technischen Anlage (400) aufweisen.

10. Computerprogrammprodukt, umfassend Befehle, die bei der Ausführung des Programms durch einen Computer diesen veranlassen, das Verfahren nach einem der Ansprüche 1 - 9 auszuführen.

11. Automatisierungssystem (10), aufweisend:
ein erstes Teilsystem (100) mit einer ersten Verarbeitungs-Instanz (H-CPU 1a), welche dazu eingerichtet ist, ein erstes, auf einem ersten Systemprogramm (FW A.B.C.) installiertes Steuerprogramm (106) auszuführen, um dadurch eine technische Anlage (400) zu steuern,
ein zweites Teilsystem (200) mit einer ersten Verarbeitungs-Instanz (H-CPU 2a), welche dazu eingerichtet ist, ein zweites, auf einem zweite Systemprogramm (FW A.B.C.) installiertes Steuerprogramm (206) auszuführen, um dadurch die technische Anlage (400) zu steuern, wenn die erste Verarbeitungs-Instanz (H-CPU 1a) des ersten Teilsystems (100) ausfällt,
eine Synchronisierungsleitung (300, 302), welche dazu eingerichtet ist, die jeweilige erste Verarbeitungs-Instanz (H-CPU 1a, H-CPU 2a) des ersten und zweiten Teilsystems (100, 200) miteinander zu synchronisieren,
wobei das erste und zweite Teilsystem (100, 200) jeweils zum Bereitstellen einer zweiten Verarbeitungs-Instanz (H-CPU 1b, H-CPU 2b) eingerichtet sind und über eine Schnittstelle (108, 208) verfügen, über die eine aktualisierte Version (FW A.E.F.) des ersten und zweiten Systemprogramms (FW A.B.C.) auf die jeweilige zweite Verarbeitungs-Instanz (H-CPU 1b, H-CPU 2b) ladbar und ein drittes Steuerprogramm (116) auf der aktualisierten Version (FW A.E.F.) des ersten Systemprogramms und ein viertes Steuerprogramm (216) auf der aktualisierten Version (FW A.E.F.) des zweiten Systemprogramms installierbar ist,
**dadurch gekennzeichnet, dass**
das erste und zweite Teilsystem (100, 200) zum Konfigurieren des dritten Steuerprogramms (116) in Abhängigkeit eines Speicherabbilds sämtlicher Zustandsinformationen des ersten Steuerprogramms (106) und Konfigurieren des vierten Steuerprogramms (216) in Abhängigkeit eines Speicherabbilds sämtlicher Zustandsinformationen des zweiten Steuerprogramms (206) eingerichtet sind, indem sie dazu eingerichtet sind, Zustände entsprechender Threads und Werte entsprechender Eingangs- und Ausgangsvariablen in Form einer Kopie von dem ersten Steuerprogramm (106) auf das dritte Steuerprogramm (116) und von dem zweiten Steuerprogramm (206) auf das vierte Steuerprogramm (216) zu übertragen.

## Claims

1. Method for updating a system program (FW A.B.C.) in an automation system (10), with the steps:
a) executing a first control program (106) installed on a first system program (FW A.B.C.) on a first processing instance (H-CPU 1a) in a first subsystem (100) of the automation system (10) and executing a second control program (206) installed on a second system program (FW A.B.C.) on a first processing instance (H-CPU 2a) in a second subsystem (200) of the automation system (10), wherein the respective first processing instance (H-CPU 1a, H-CPU 1b) of the first and second subsystems (100, 200) are synchronised with one another via a synchronisation line (300, 302), wherein the first processing instance (H-CPU 1a) of the first subsystem (100) controls a technical system (400) and the first processing instance (H-CPU 1b) of the second subsystem (200) takes over control if the first processing instance (H-CPU 1a) of the first subsystem (100) fails,
**characterised by** the following steps:
b) in each case, providing a second processing instance (H-CPU 1b, H-CPU 2b) in the first and second subsystems (100, 200), loading (S1) an updated version (FW A.E.F.) of the first and second system programs onto the respective second processing instance (H-CPU 1b, H-CPU 2b) and starting (S2) the respective second processing instances (H-CPU 1b, H-CPU 2b) in parallel to step a), wherein a third control program (116) is installed on the updated version (FW A.E.F.) of the first system program and a fourth control program (216) is installed on the updated version (FW A.E.F.) of the second system program, and
c) configuring (S4) the third control program (116) in dependence on a memory image of all status information of the first control program (106) and configuring the fourth control program (216) in dependence on a memory image of all status information of the second control program (206), in that states of corresponding threads and values of corresponding input and output variables are transmitted in the form of a copy from the first control program (106) to the third control program (116) and from the second control program (206) to the fourth control program (216).

2. Method according to claim 1,
**characterised in that**
before the configuration in step c), the respective first processing instances (H-CPU 1a, H-CPU 2a) in the first and second subsystems (100, 200) are stopped insofar as the execution of the first and second control programs (106, 206) is concerned.

3. Method according to claim 1 or 2,
**characterised in that**
the execution of the second control program (206) on the first processing instance (H-CPU 2a) in the second subsystem (200) is embodied to trail the execution of the first control program (106) on the first processing instance (H-CPU 1a) in the first subsystem (100).

4. Method according to one of claims 1 - 3,
**characterised in that**
the synchronisation of the first processing instances (H-CPU 1a, H-CPU 1b) of the first and second subsystems (100, 200) according to step a) includes:
transmitting process input values of the first processing instance (H-CPU 1a) of the first subsystem (100), and
transmitting releases of the first processing instance (H-CPU 1a) of the first subsystem (100) which indicate which processing steps of the first control program (106) have already been processed,
synchronising the second control program (106) in dependence on the transmitted process input parameters and releases.

5. Method according to one of claims 1 - 4,
**characterised in that**
the respective second processing instances (H-CPU 1b, H-CPU 2b) according to step b) are started in dependence on configuration data (104, 204) containing information relating to the configuration of the technical system (400), and/or wherein the configuration data and/or the control program (116, 216) to be installed in step b) is in each case stored in the first and second subsystems (100, 200).

6. Method according to one of claims 1 - 5,
**characterised in that**
after starting the respective second processing instances (H-CPU 1b, H-CPU 2b) according to step b), passive connection of the first processing instance (H-CPU 2a) of the second subsystem (200) is interrupted and then the started second processing instance (H-CPU 1b) of the first subsystem (100) establishes a passive connection to the technical system (400) (S3).

7. The method according to one of claims 1 - 6,
**characterised in that**
after the configuration according to step c), the second processing instance (H-CPU 1b) of the first subsystem (100) establishes an active connection to the technical system (400) and the second processing instance (H-CPU 1b) of the second subsystem (200) establishes a passive connection to the technical system (S5, S6).

8. Method according to one of claims 1 - 7,
**characterised in that**
the first and second subsystems (100, 200) in each case include a hypervisor (102, 202), which provides the first and second processing instances (H-CPU 1a, H-CPU 1b, H-CPU 2a, H-CPU 2b).

9. Method according to one of claims 1 - 8,
**characterised in that**
the first and second subsystems (100, 200) in each case include a programmable logic controller, a power supply and/or an interface (500) to the technical system (400).

10. Computer program product comprising instructions which, when the program is executed by a computer, cause the computer to execute the method according to one of claims 1 - 9.

11. An automation system (10) including:
a first subsystem (100) with a first processing instance (H-CPU 1a) which is configured to execute a first control program (106) installed on a first system program (FW A.B.C.) in order thereby to control a technical system (400),
a second subsystem (200) with a first processing instance (H-CPU 2a) which is configured to execute a second control program (206) installed on a second system program (FW A.B.C.) in order thereby to control the technical system (400) if the first processing instance (H-CPU 1a) of the first subsystem (100) fails,
a synchronisation line (300, 302) which is configured to synchronise the respective first processing instance (H-CPU 1a, H-CPU 2a) of the first and second subsystems (100, 200) with one another,
wherein the first and second subsystems (100, 200) are in each case configured to provide a second processing instance (H-CPU 1b, H-CPU 2b) and have an interface (108, 208) via which an updated version (FW A.E.F.) of the first and second system programs (FW A.B.C.) can be loaded onto the respective second processing instance (H-CPU 1b, H-CPU 2b) and a third control program (116) can be installed on the updated version (FW A.E.F.) of the first system program and a fourth control program (216) can be installed on the updated version (FW A.E.F.) of the second system program,
**characterised in that**
the first and second subsystems (100, 200) are configured to configure the third control program (116) in dependence on a memory image of all status information of the first control program (106) and to configure the fourth control program (216) in dependence on a memory image of all status information of the second control program (206), **in that** states of corresponding threads and values of corresponding input and output variables are transmitted in the form of a copy from the first control program (106) to the third control program (116) and from the second control program (206) to the fourth control program (216).

## Revendications

1. Procédé de mise à jour d'un programme (FW A.B.C.) de système dans un système (10) d'automatisation, comprenant les stades :
a) exécution d'un premier programme (106) de commande, installé sur un premier programme (FW A.B.C.) de système, sur une première instance (H-CPU 1a) de traitement dans un premier système (100) partiel du système (10) d'automatisation et exécution d'un deuxième programme (206) de commande, installé sur un deuxième programme (FW A.B.C.) de système, sur une première instance (H-CPU 2a) de traitement dans un deuxième système (200) partiel du système (10) d'automatisation, dans lequel la première instance (H-CPU 1a, H-CPU 1b) respective de traitement du premier et du deuxième systèmes (100, 200) partiels sont synchronisées entre elles par une ligne (300, 302) de synchronisation, dans lequel la première instance (H-CPU 1a) de traitement du premier système (100) partiel commande une installation (400) technique et la première instance (H-CPU 1b) de traitement du deuxième système (200) partiel prend en charge la commande, si la première instance (H-CPU 1a) de traitement du premier système (100) partiel est défaillante,
**caractérisé par** les stades suivants :
b) mise à disposition respectivement d'une deuxième instance (H-CPU 1b, H-CPU 2b) de traitement dans le premier et le deuxième systèmes (100, 200) partiels, chargement (S1) d'une version (FW A.E.F.) mise à jour du premier et du deuxième programme de système sur la deuxième instance (H-CPU 1b, H-CPU 2b) respective de traitement et lancement (S2) des deuxièmes instances (H-CPU 1b, H-CPU 2b) respectives de traitement en parallèle au stade a), dans lequel, sur la version (FW A.E.F.) mise à jour du premier programme de système, on installe un troisième programme (116) de commande et, sur la version (FW A.E.F.) mise à jour du deuxième programme de système, un quatrième programme (216) de commande, et
c) configuration (S4) du troisième programme (116) de commande en fonction d'une image mémoire de l'ensemble des informations d'états du premier programme (106) de commande et configuration du quatrième programme (216) de commande en fonction d'une image mémoire de l'ensemble des informations d'états du deuxième programme (206) de commande, par le fait que des états de threads correspondants et des valeurs de variables correspondantes d'entrée et de sortie sont transmises sous la forme d'une copie du premier programme (106) de commande au troisième programme (116) de commande et du deuxième programme (206) de commande au quatrième programme (216) de commande.

2. Procédé suivant la revendication 1,
**caractérisé**
**en ce que**, avant la configuration dans le stade c), on arrête les premières instances (H-CPU 1a, H-CPU 2a) respectives de traitement dans le premier et le deuxième systèmes (100, 200) partiels, dans la mesure ou l'exécution du premier et du deuxième programme (106, 206) de commande est concerné.

3. Procédé suivant la revendication 1 ou 2,
**caractérisé**
**en ce que** l'exécution du deuxième programme (206) de commande sur la première instance (H-CPU 2a) de traitement dans le deuxième système (200) partiel est constitué de manière à se poursuivre par rapport à l'exécution du premier programme (106) de commande sur la première instance (H-CPU 1a) de traitement dans le premier système (100) partiel.

4. Procédé suivant l'une des revendications 1 à 3, **caractérisé**
**en ce que** la synchronisation des premières instances (H-CPU 1a, H-CPU 1b) de traitement du premier et du deuxième systèmes (100, 200) partiels suivant le stade a) comporte :
transmission de valeurs d'entrée de processus de la première instance (H-CPU 1a) de traitement du premier système (100) partiel, et
transmission de validations de la première instance (H-CPU 1a) de traitement du premier système (100) partiel, qui indiquent les stades de traitement du premier programme (106) de commande, qui ont été déjà traités,
synchronisation du deuxième programme (106) de commande en fonction des paramètres d'entrée de processus transmis et des validations.

5. Procédé suivant l'une des revendications 1 à 4, **caractérisé**
**en ce que** le lancement des deuxièmes instances (H-CPU 1b, H-CPU 2b) respectives de traitement suivant le stade b) s'effectue en fonction de données (104, 204) de configuration, qui contiennent des informations suivant la configuration de l'installation (400) technique, et/ou dans lequel les données de configuration et/ou le programme (116, 216) de commande à installer dans le stade b) est mis en mémoire respectivement dans le premier et le deuxième systèmes (100, 200) partiels.

6. Procédé suivant l'une des revendications 1 à 5, **caractérisé**
**en ce que**, après le lancement des deuxièmes instances (H-CPU 1b, H-CPU 2b) respectives de traitement suivant le stade b), on interrompt une liaison passive de la première instance (H-CPU 2a) de traitement du deuxième système (200) partiel, et ensuite la deuxième instance (H-CPU 1b) de traitement, lancée du premier système (100) partiel établit (S3) une liaison passive avec l'installation (400) technique.

7. Procédé suivant l'une des revendications 1 à 6, **caractérisé**
**en ce que**, après la configuration suivant le stade c), la deuxième instance (H-CPU 1b) de traitement du premier système (100) partiel établit (S5, S6) une liaison active avec l'installation (400) technique et, la deuxième instance (H-CPU 1b) de traitement du deuxième système (200) partiel, une liaison passive avec l'installation technique.

8. Procédé suivant l'une des revendications 1 à 7, **caractérisé**
**en ce que** le premier et le deuxième systèmes (100, 200) partiels ont chacun un hyperviseur (102, 202), qui mettent à disposition la première et la deuxième instances (H-CPU 1a, H-CPU 1b, H-CPU 2a, H-CPU 2b) de traitement.

9. Procédé suivant l'une des revendications 1 à 8, **caractérisé**
**en ce que** le premier et le deuxième systèmes (100, 200) partiels ont chacun un automate programmable, une alimentation en courant et/ou une interface (500) avec l'installation (400) technique.

10. Produit de programme d'ordinateur, comprenant des instructions qui, lors de l'exécution du programme par ordinateur, font que celui-ci exécute le procédé suivant l'une des revendications 1 à 9.

11. Système (10) d'automatisation, comportant :
un premier système (100) partiel ayant une première instance (H-CPU 1a) de traitement, qui est agencée pour exécuter un premier programme (106) de commande installé sur un premier programme (FW A.B.C.) de système pour commander ainsi une installation (400) technique,
un deuxième système (200) partiel ayant une première instance (H-CPU 2a) de traitement, qui est agencée pour exécuter un deuxième programme (206) de commande installé sur un deuxième programme (FW A.B.C.) de système pour commander ainsi l'installation (400) technique, si la première instance (H-CPU 1a) de traitement du premier système (100) partiel est défaillante,
une ligne (300, 302) de synchronisation, qui est agencée pour synchroniser entre elles la première instance (H-CPU 1a, H-CPU 2a) respective de traitement du premier et du deuxième systèmes (100, 200) partiels,
dans lequel le premier et le deuxième systèmes (100, 200) partiels sont agencés respectivement pour mettre à disposition une deuxième instance (H-CPU 1b, H-CPU 2b) de traitement et pour disposer d'une interface (108, 208), par laquelle une version (FW A.E.F.) mise à jour du premier et du deuxième programmes (FW A.B.C.) de système peut être chargée sur la deuxième instance (H-CPU 1b, H-CPU 2b) respective de traitement et un troisième programme (116) de commande peut être installé sur la version (FW A.E.F.) du premier programme de système et un quatrième programme (216) de commande sur la version (FW A.E.F.) mise à jour du deuxième programme de système,
**caractérisé en ce que**
le premier et le deuxième systèmes (100, 200) partiels sont agencés pour configurer le troisième programme (116) de commande en fonction d'une image mémoire de l'ensemble des informations d'états du premier programme (106) de commande et configurer le quatrième programme (216) de commande en fonction d'une image mémoire de l'ensemble des informations d'états du deuxième programme (206) de commande, par le fait qu'ils sont agencés pour transmettre des états de threads correspondants et des valeurs de variables d'entrée et de sortie correspondants sous la forme d'une copie du premier programme (106) de commande au troisième programme (116) de commande et du deuxième programme (206) de commande au quatrième programme (216) de commande.
